# FASCICULE DE BREVET EUROPEEN

(11) **EP 2 496 533 B1**
(45) Date de publication et mention de la délivrance du brevet: **15.05.2019**
(21) Numéro de dépôt: 10787858.9
(22) Date de dépôt: 27.10.2010
(51) Int. Cl.: C04B 28/08, C04B 7/153, C04B 111/32

(54) **LIANTS POUR MATERIAUX DE CONSTRUCTION**
BINDER FÜR BAUMATERIAL
CONSTRUCTION MATERIAL BINDERS

(30) Priorité: 05.11.2009 FR 0957824
(43) Date de publication de la demande: 12.09.2012
(73) Titulaire: Saint-Gobain Weber, 77170 Servon (FR)
(72) Inventeur: HESSELBARTH, Frank, 45659 Recklinghausen (DE); DUDDA, Udo, 44879 Bochum (DE)
(74) Mandataire: Saint-Gobain Recherche
(86) Numéro de dépôt international: PCT/FR2010/052300
(87) Numéro de publication internationale: WO 2011/055063

(56) Documents cités:
- EP-A1- 0 814 067
- EP-A1- 1 900 705
- WO-A1-00/00448
- WO-A2-02/28794
- DE-A1- 19 501 100
- JP-A- 2000 072 519
- DATABASE WPI Week 199203 Thomson Scientific, London, GB; AN 1992-024321 XP002588325, TANAKA YOSHIO [JP]; TSUTSUMI TETSURO [JP]; SAITO KEIJI [JP]; TANAKA HISANOBU [JP]: "RAPID CURING COMPOSITION", & WO 91/19687 A1 (MITSUBISHI MINING & CEMENT CO) 26 décembre 1991 (1991-12-26)
- IMAIZUMI, K.; ET AL.: "Manufacture of fiber-reinforced lightweight cement-gypsum-slag product", CHEMICAL ABSTRACTS, CHEMICAL ABSTRACTS SERVICE (C A S), US, vol. 115, no. 55743, 12 août 1991 (1991-08-12), page 385, XP000251294, ISSN: 0009-2258
- ADASKA W S ET AL: "Beneficial Uses of Cement Kiln Dust", CEMENT INDUSTRY TECHNICAL CONFERENCE RECORD, 2008 IEEE, IEEE, PISCATAWAY, NJ, USA, 18 May 2008 (2008-05-18), pages 210-228, XP031270209, ISBN: 978-1-4244-2080-3

## Description

La présente invention concerne des liants hydrauliques à base de dérivés d'aluminosilicate de calcium, tels que les laitiers de haut fourneau, en présence d'un système activateur ; ainsi que des matériaux de construction obtenus à partir de tels liants, tels que du béton, du mortier, des éléments préfabriqués ou des panneaux de revêtement.

Le ciment de Portland, liant très largement utilisé pour la fabrication des bétons, mortiers, ainsi que d'un large éventail d'éléments préfabriqués, est composé essentiellement de clinker obtenu dans un premier temps en concassant des matières première telles que l'argile et le calcaire, puis finement broyé avec une faible incorporation de sulfate de calcium.

Bien qu'encore très répandue, la préparation du ciment de Portland demeure une source importante d'émissions de CO₂. Ces émissions sont principalement dues au processus de calcination (décarbonatation du calcaire en oxyde de calcium) et au chauffage de l'ordre de 1450°C qu'il est nécessaire de réaliser. Le développement de liants de substitution, permettant un plus faible rejet de CO₂ dans l'atmosphère, est un enjeu environnemental de tout premier ordre. D'autre part, l'utilisation du ciment de Portland conduit à une formation en quantité importante de Ca(OH)₂ (portlandite), qui engendre un pH très élevé (12-13) et peut conduire à des pertes de durabilité. En effet la portlandite est sensible à la carbonatation. Les bétons ou mortiers carbonatés peuvent perdre leur intégrité et développer des pathologies.

On connaît des liants hydrauliques avec une substitution totale ou partielle du ciment Portland par des déchets de l'industrie de l'acier, comme les laitiers. Parmi les plus connus, le ciment de haut-fourneau consiste en un mélange de laitiers de haut fourneau granulés broyés compris entre 36 et 95% en poids complété notamment avec du clinker de ciment de Portland, et est identifié sous la dénomination de ciment de classe CEM III/A-B-C.

D'autres compositions connues des demandes WO2005/097700, US2008/0257223, ou WO2009/005205 substituent partiellement, ou en totalité, les clinkers du ciment de Portland ou du ciment de Portland par des laitiers de haut fourneau ou des cendres volantes (issue des centrales thermiques à charbon). Contrairement au ciment de Portland, de tels dérivés d'aluminosilicate ne sont pas ou peu hydrauliques par nature, car ils ne forment pas de chaux hydratée (ou portlandite) par hydratation et il est nécessaire d'ajouter un activateur alcalin ou de la chaux pour solubiliser la matière alumino-silicate. Il se forme par réaction des hydrates responsables de la prise du matériau. Ces compositions de l'état de la technique qui contiennent également des quantités variables de source de sulfate de calcium, qui peuvent atteindre 15% en poids total du mélange, incorporent des agents activateurs alcalins tels que la chaux hydratée, la soude, la potasse, et même le métasilicate de sodium. La présence de tels agents alcalins engendrant un fort pH, peut provoquer de graves irritations cutanées lors de l'utilisation des ciments et les rendent donc difficiles à manipuler.

Le terme « activateur » au sens de l'invention définit un système comprenant au moins un composé destiné à améliorer la prise et/ou le durcissement du liant.

La demande WO2007/096686 concerne une composition pour liant comprenant d'une part un mélange de laitier et de cendres volantes, et d'autre part un activateur comprenant différentes bases. Les compositions de cette demande ne sont pas des liants hydrauliques directement prêts à l'emploi. Les activateurs et le mélange laitier avec cendres volantes doivent notamment être mis séparément au contact de l'eau, puis on mixe ensuite les deux fractions, ce qui complique la préparation des mortiers ou bétons.

La publication Cernent and Concrete Research 29 (1999) 459-462 concerne une étude de l'utilisation de poussières de laitier de haut fourneau comme accélérateur de la réaction de durcissement d'un ciment. Ainsi, l'adjonction de 10% de poussière de laitiers de haut fourneau granulés broyés, avec des grains présentant une finesse de 14960 cm²/g (unité couramment utilisée sous l'appellation de Blaine), permet d'améliorer les propriétés physico-chimiques du liant. L'obtention d'une telle poussière sous forme de microparticules demande de l'énergie lors de son élaboration, donc on préfère l'utiliser en partie mélangée en combinaison avec des grains de laitier de plus grandes tailles. Le ciment comprenant la poussière ultrafine de laitier de ce document de l'état de la technique, comporte en outre 18% en poids total du liant d'un activateur alcalin constitué d'un mélange de chaux hydraulique et de métasilicate de sodium (voir l'exemple 4 du tableau 2.) Un tel mélange est irritant lié à l'emploi de bases fortes comme le métasilicate de sodium ou Ca(OH)₂ en solution aqueuse, en quantités importantes.

On connait également de la demande DE 195 01 100 des mélanges pour béton projeté contenant des laitiers de haut fourneau. La demande WO 00/00448 décrit des liants contenant moins de 35% de laitier de haut fourneau granulé broyé activé à l'aide de poussières de cimenterie.

Le terme « Blaine » dans le contexte de l'invention est une unité de mesure de la finesse de mouture d'un ingrédient solide exprimée en cm² par gramme de solide, cette unité sert à mesurer la surface utile des grains de solide. L'appareil utilisé pour déterminer la finesse de mouture d'un solide dans le domaine technique des ciments est appelé «Perméabilimètre Blaine».

L'inconvénient majeur lié à l'utilisation des liants présentés précédemment est la présence de bases fortes utilisées en quantités importantes pour permettre une prise suffisamment rapide du liant. La présence d'une source de sulfate de calcium dans certains de ces mélanges en grande quantité comme indiqué plus haut, pour accélérer le durcissement du ciment, est également gênante. Un tel excès de sulfate de calcium peut entraîner la formation d'un excès d'Ettringite à un stade avancé de la prise du ciment et pendant son durcissement. Cet excès d'Ettringite, tout comme la présence de sulphate de calcium en quantité importante n'ayant pas réagit, peut provoquer des gonflements indésirables du matériau et par conséquent une perte de résistance et de durabilité pouvant aboutir à la destruction du matériau.

Pour pallier à tout ou une partie des inconvénients précités, la présente invention a pour objet, selon un premier aspect, un liant hydraulique selon la revendication 1.

Les inventeurs ont mis en évidence de manière inattendue qu'un ajout d'une faible quantité de poussière ou microparticules de laitier au liant augmente la réactivité dudit liant lors de sa prise et/ou de son durcissement, sans qu'il soit utile d'avoir recours à un système activateur comprenant une quantité importante de base (système alcalin). Les quantités de base nécessaires à une bonne activation de la réaction d'hydratation et de dissolution dans l'eau du liant selon l'invention, sont très faibles. Les inventeurs ont établi que les microparticules de laitier agissent à la manière d'agents de nucléation et permettent une initialisation rapide du processus de solubilisation et d'hydratation de la composition du liant au contact de l'eau.

On dispose ainsi d'un liant performant, près à l'emploi pour l'élaboration de matériaux de construction, et ne demandant pas de précaution particulière eue égard aux risques chimiques lors d'éventuelles projections sur les professionnels du bâtiment amenés à le manipuler quotidiennement.

Dans le contexte de la présente invention lorsque l'on définit une plage de valeur par les termes « quantité comprise entre X et Y », les bornes X et Y sont comprises dans la plage de valeur ainsi définie.

Dans le contexte de la présente invention, les quantités données en pourcentage de poids total du liant sont données pour le liant sec.

De préférence, la quantité totale de base présente dans le liant hydraulique selon l'invention n'excède pas 1% du poids total du liant.

Les dérivés d'aluminosilicate de calcium d'une finesse inférieure à 6000 Blaine de la composition du liant selon l'invention comprennent un laitier de haut fourneau granulé broyé, des cendres volantes, telles que des cendres volantes silico-alumineuses, de l'argile calcinée et/ou des poussières d'argile expansée. On peut aussi mettre, en complément ou de manière alternative, dans la composition du liant selon l'invention des cendres volantes silico-calco-alumineuses notamment de charbon (lignite, charbon subbitumineux, houille...).

Ces dérivés d'aluminosilicate de calcium sont pour l'essentiel des déchets de l'industrie de l'acier, ou des industries d'extraction minière tels que l'industrie du charbon, et il est donc intéressant de pouvoir valoriser ainsi de tels matériaux pour éviter leur mise en décharge.

Le laitier de haut fourneau granulé broyé est compris dans une quantité comprise entre 50 et 98% du poids total du liant, et de préférence comprise entre 80 et 95%.

Les grains de laitiers de haut fourneau granulés broyés ont une finesse habituellement de l'ordre de 3800 à 4500 Blaine. Obtenir des laitiers de haut fourneau granulés broyés dans cette gamme de finesse nécessite un broyage effectué dans tous types de broyeurs (broyeurs à boulets, à meule, ....). Le broyage consomme peu d'énergie et l'empreinte CO₂ équivalente reste faible (de 25 à 60 kg de CO₂ par tonne de laitier broyé). Cette empreinte CO₂ est bien inférieure à celle obtenue avec des ciments Portland classique (environ 1 tonne de CO₂ par tonne de ciment Portland). Il est donc intéressant d'augmenter la part de laitier de haut fourneau granulé broyé dans cette gamme de finesse dans la composition.

De préférence, les liants de l'invention décrits précédemment comprenant des cendres volantes, telles que des cendres volantes silico-alumineuses ou silico-calco-alumineuses, en comprennent une quantité inférieure ou égale à 50% du poids total du liant, de préférence entre 5 et 20%.

Les cendres volantes silico-alumineuses, connues sous le nom de cendres volantes de classe F, diffèrent des cendres volantes silico-calco-alumineuses, connues sous le nom de cendres volantes de classe C, par leur teneur respective en calcium. Les cendres volantes de classe F comprennent moins de 8% de calcium, et sont moins réactives que les cendres volantes de classe C qui en comprennent plus de 8% en poids.

De même, les liants de l'invention comprenant des poussières d'argile expansée et/ou calcinée, comprennent une quantité de chaque type de poussière inférieure ou égale à 50% du poids total du liant.

Les microparticules de laitier de la composition selon l'invention ont de préférence une finesse comprise entre 6000 et 15000 Blaine, et de manière encore d'avantage préférée une finesse comprise entre 6000 et 9000 Blaine, et de manière encore plus préférée 7000 et 8000 Blaine.

Etant donné que le broyage des particules de laitier à une finesse supérieure ou égale à 6000 Blaine est une opération qui consomme de l'énergie et produit du dioxyde de carbone, il est préférable d'incorporer à la composition des grains d'une finesse suffisante pour activer convenablement le mélange, sans pour autant qu'il soit nécessaire d'avoir recours à des poussières d'une finesse trop importante. D'autre part, les inventeurs ont établi que pour la plupart des compositions de liant qui figurent dans les exemples décrits à la suite, augmenter la finesse au-delà de 8000 Blaine ne permettait pas d'augmenter sensiblement la réactivité. Pour des finesses au-delà de 9000 Blaine on observe le plus souvent des phénomènes de d'agglomération qui peuvent limiter le phénomène d'accélération de la réaction induit par la présence des microparticules. Les microparticules de laitier ayant une finesse entre 6000 et 9000 Blaine, voire même 7000 et 8000 Blaine, semblent donc offrir le meilleur compromis.

Les compositions selon l'invention comprennent avantageusement une source de sulfate de calcium telle que du gypse, de l'hémihydrate du sulfate de calcium, de l'anhydrite et du phosphogypse, pris seuls ou en combinaison, dans une quantité comprise entre 1 et 5% du poids total du liant ; et de manière préférée, cette source de sulfate de calcium est dans une quantité comprise entre 2 et 4% du poids total du liant.

Une telle quantité de sulfate de calcium dans le mélange garantit une activation suffisante au début de la réaction et un piégeage de l'eau, tout en évitant une formation tardive d'Ettringite trop importante. Il s'agit donc du meilleur compromis pour une bonne mise en marche de la réaction, sans fragiliser le matériau pendant les étapes consécutives à la prise du liant.

Le liant hydraulique selon l'invention comprend de manière avantageuse des sulfates de métaux alcalins tels que lithium, sodium et/ou potassium, de préférence dans une quantité inférieure ou égale à 1% du poids total du liant : les inventeurs ont également montrés qu'un tel ajout de sel de métaux alcalin dans de telles proportions favorisait la prise du liant et était favorable notamment en association avec une source de sulfate de calcium.

De préférence la base comprise dans le liant selon l'invention décrite précédemment, est prise dans une quantité inférieure ou égale à 0.5%, et de manière préférée allant de 0.2 à 0.4 % du poids total du liant.

La base présente dans la composition selon l'invention est, par exemple, un hydroxyde de métal alcalin ou alcalino-terreux, tel que KOH ou Ca(OH)₂, il peut s'agir aussi d'un carbonate de métal alcalin ou alcalino-terreux, tel que Na₂CO₃, K₂CO₃ ou Li₂CO₃, ou encore un dérivé de silicate de métal alcalin ou alcalino-terreux, tel que le métasilicate de sodium. Il peut également s'agir d'un mélange de bases, comprenant notamment les bases précitées, tel que ledit mélange de bases est pris dans une quantité inférieure ou égale à 0.5%, et de manière préférée de 0.2 à 0.4 % du poids total du liant.

Le liant hydraulique selon l'invention peut comprendre avantageusement du ciment de Portland et/ou du ciment connu sous le nom anglais de calcium « sulfoaluminate cernent » dénommé ci-après ciment de sulfoaluminate de calcium, de préférence dans des quantités inférieures ou égales à 4% du poids total du liant.

Le liant hydraulique tel que décrit précédemment peut être hydraté à température ambiante ou à des températures élevées (supérieure à 200°C) en fonction de l'application visée.

Le liant selon l'invention est utilisé avantageusement en association avec des charges, des fillers, du sable, des pigments et/ou des granulats tels que du quartz, du calcaire et/ou de la dolomite. Aussi, il peut également être utilisé en combinaison avec des charges de faible densité telles que du verre expansé, de l'argile expansée, du polystyrène expansé, de la vermiculite et/ou de la perlite expansée.

Le liant selon l'invention peut être utilisé en association avec d'autres ciments tels que du ciment d'aluminate de calcium et/ou ciment de sulfo-aluminate de calcium.

Des accélérateurs ou des retardateurs peuvent être avantageusement ajoutés dans la composition du liant, typiquement dans des teneurs inférieures ou égale à 1% en poids total de liant.

Les compositions de liant selon l'invention peuvent également comprendre des adjuvants tels que des plastifiants, par exemple des produits à base d'acides polycarboxyliques et de préférence d'éthers polycarboxyliques, des lignosulphonates, des polynaphtalènes sulphonates, des superplastifiants à base de mélamines, des polyacrylates et/ou des copolymères vinyliques, typiquement dans des teneurs inférieures ou égale à 10% en poids total de liant. Elles peuvent également comprendre des polymères tels que des éthers de cellulose.

De même, les compositions selon l'invention peuvent comprendre des adjuvants tels que des polymères sous forme liquide et/ou sous forme de poudre redispersable, typiquement dans des teneurs inférieures ou égale à 10% en poids total de liant.

De même encore, les compositions selon l'invention peuvent comprendre des agents anti-mousses ou surfactants, des agents hydrophobes, des tensioactifs ou agent de surface et/ou des inhibiteurs de corrosion, typiquement dans des teneurs inférieures ou égale à 1% en poids total de liant.

La présente invention a pour objet, selon un deuxième aspect, un béton, un mortier, un mortier pré-mélangé, un élément préfabriqué, une brique, une plaque, un bloc ou un panneau de revêtement comprenant au moins un liant hydraulique tel que décrit précédemment.

Les bétons, les mortiers ou les mortiers pré-mélangés tels que les adhésifs pour carrelage ou éléments de construction, comme par exemple les adhésifs pour coller des carrelages de céramique ou de verre, fait à partir du liant selon l'invention, ont un durcissement à court terme très satisfaisant.

Les liants selon l'invention sont particulièrement adaptés à une utilisation dans, ou avec, des matériaux destinés à subir un écoulement d'eau permanent. De tels matériaux, en particulier les bétons ou mortiers, qui incorporent le liant selon l'invention permettent d'éviter les phénomènes d'efflorescence, qui sont le plus souvent inesthétiques, car ils ont notamment comme conséquence l'apparition de matières poudreuses blanches en surface.

Les matériaux de constructions, tels que ceux cités précédemment, qui intègrent le liant hydraulique selon l'invention ont démontré une bonne résistance aux agents chimiques, et en particulier aux pluies acides et aux eaux sulfatées et autres attaques chimiques externe ou interne.

Les liants selon l'invention peuvent également être avantageusement incorporés dans tout type de mortier pré-mélangé, tels que des mortiers de fixation, et plus particulièrement des mortiers de jointoiement, des mortiers-colles, des adhésifs et plus particulièrement des adhésifs pour plaque de céramique.

Les mortiers de jointoiement, préparés avec au moins un liant selon l'invention, permettent le remplissage spécifique des interstices entre différents éléments de maçonnerie ou de carrelages.

Un, ou plusieurs, liants hydrauliques selon la présente invention pris en mélange avec des agrégats, des polymères et/ou d'autres additifs organiques, permettent également de préparer des mortier-colles et des adhésifs pour coller des matériaux de constructions du bâtiment.

Pour sa part, le mortier de montage, addition d'un ou de plusieurs liants selon l'invention, d'agrégats, d'additifs et/ou d'adjuvants, est utilisé pour l'assemblage d'éléments de maçonnerie. Il peut être destiné à l'application à joints épais ou minces.

Les mortiers ou bétons pré-mélangés selon l'invention peuvent également être des mortiers ou bétons pour chapes, et plus généralement tout type de mortier pour sol qui intègre notamment des enduits de lissage. Il peut également s'agir d'enduits du type béton projeté.

Les mortiers ou bétons pré-mélangés selon l'invention peuvent aussi être des mortiers de réparation qui ont un rôle important pour les ouvrages. Ils permettent la remise en état de béton ou son remplacement partiel. On citera par exemple, des mortiers d'injection qui sont des fluides destinés aux comblements de fissures ou de cavités. Ces derniers sont généralement appliqués par injection sous pression.

Les mortiers ou bétons pré-mélangés selon l'invention peuvent avantageusement être des mortiers de façade tels que des mortiers de ragréage, des sous-enduits, des monocouches, des mortiers de parements organiques et des compositions d'imperméabilisation et d'étanchéité.

Les mortiers de ragréage selon l'invention sont avantageusement utilisés pour la finition d'un support (mur, sol, plafond, etc...) afin d'obtenir une surface plane et lisse.

Les mortiers de sous-enduits selon l'invention permettent avantageusement de réaliser au moins une couche intermédiaire d'un système d'enduit "multicouches".

Les mortiers monocouches s'applique en une couche qui peut remplir des fonctions d'imperméabilisation et de décoration.

Les mortiers d'imperméabilisation et d'étanchéité selon la présente invention se caractérisent par leur résistance à l'eau de pluie, ce qui en fait d'excellents produits de protection contre les intempéries, ils sont donc des mortiers de choix pour une application sur les façades des bâtiments.

Les mortiers pré-mélangés selon l'invention peuvent également être tout type d'enduit, ainsi que des crépis, pour un travail en intérieur ou en extérieur.

Typiquement les bétons ou mortiers pré-mélangés selon l'invention sont prêts à l'emploi et son avantageusement utilisés pour habiller les façades, pour réussir la pose d'élément préfabriqué, du carrelage ou encore de panneau de revêtement, et de manière générale pour construire et entretenir tout type d'ouvrage du bâtiment.

Les panneaux ou planches de revêtement selon l'invention seront idéalement d'une épaisseur de 3 à 25 mm. Ils pourront de préférence être fabriqués par un mélange du liant avec des agrégats, des charges ou autres, suivi d'une étape de durcissement puis d'une étape de découpe.

La présente invention a pour objet, selon un troisième aspect, un procédé de préparation d'un matériau de construction tel que ceux décrits précédemment comprenant les étapes :
1) ajouter au moins un type de granulats, sable et éventuellement au moins un adjuvant, et
2) hydrater le liant hydraulique selon l'invention décrit précédemment.

Les granulats ajoutés au mélange dépendent de la nature du matériau que l'on souhaite obtenir. Il s'agit généralement de graviers, de sable, de dolomite, de calcaire de différentes granulométries.

La présente invention et ses avantages seront mieux compris à la lecture des exemples qui suivent, uniquement donnés à titre illustratif et qui ne peuvent en aucun cas être considérés comme limitatifs.

### EXEMPLES :

**Tableau 1**

| **Liant adhésif pour carrelage avec du sable** | | Quantité en pourcentage du poids total de composition sèche | | Total |
|---|---|---|---|---|
| | | | | |
| CaSO₄ | % | 1,5 | | |
| Cendres volantes | % | 5,0 | | |
| laitier (4000 Blaine) | % | 35,0 | | |
| laitier (7500 Blaine) | % | 4,5 | | |
| Sable de silice | % | 49,0 | | |
| Ciment de Portland | % | 1,0 | | |
| 52.5 | | | | |
| Poudre de polymère (copolymère d'acétate de vinyle d'éthylène) | % | 3,4 | | |
| Ether de cellulose | % | 0,4 | | |
| Sulfate alcalin | % | 0,10 | | |
| Carbonate alcalin | % | 0,10 | | 100,0 |

Le tableau 1 donne une composition de liant selon l'invention, à laquelle du sable est ajouté, destiné principalement au collage de pièces de carrelage sur tout type de mur. Un tel liant adhésif, après ajout de 25% d'eau à une température d'environ 22°C, donne une patte de consistance crémeuse. Un tel liant est du type C2 TE S1.

Des essais effectués afin de mesurer la force d'adhésion du liant adhésif dont la composition sèche est données au tableau 1 ont été conduits, ils sont résumés dans le tableau 2.

Les échantillons secs 1, 2 et 3 correspondent à des tests de résistance à la traction effectués sur des pièces de carrelage fixées sur un support plan grâce au liant avec du sable selon le tableau 1. La résistance à l'arrachement exprimée en N/mm² est mesurée par arrachement sur les échantillons 1, 2 et 3 après respectivement 24 heures, 7 jours et 28 jours de stockage dans les conditions standards, c'est-à-dire à une température de 23°C avec une humidité relative de 50%.

L'échantillon humide 4 correspond de la même manière à un test de résistance à la traction effectué sur des pièces de carrelage fixées sur un support plan grâce au liant avec du sable selon le tableau 1. La résistance à l'arrachement exprimée en N/mm² est mesurée par arrachement sur l'échantillon 4 après respectivement 7 jours de stockage dans les conditions standards, suivis de 21 jours de stockage en immersion dans l'eau à 23 °C.

L'échantillon 70°C 5 correspond de la même manière à un test de résistance à la traction effectué sur des pièces de carrelage fixées sur un support plan grâce au liant avec du sable selon le tableau 1. La résistance à l'arrachement exprimée en N/mm² est mesurée par arrachement sur l'échantillon 5 après respectivement 14 jours de stockage dans les conditions standards, suivis de 14 jours de stockage à 70°C, suivis à nouveau de 1 jour dans les conditions standards.

L'échantillon sec 6 correspond à un test de force d'adhésion réalisé sur une pièce de carrelage en faïence qui est posée sur un support plan, 20 minutes après l'application du liant avec du sable selon le tableau 1 sur la pièce de carrelage et/ou sur le support plan. La résistance à l'arrachement exprimée en N/mm² est mesurée par arrachement sur l'échantillon 6 après respectivement 28 jours de stockage dans les conditions standards.

Tous les tests ont été effectués selon la norme européenne EN 12004. Il ressort du tableau 2 que les tests ont tous satisfait aux critères exigés par cette norme, étant donné que les valeurs mesurées sont toutes supérieures aux valeurs minimum requises.

**Tableau 2**

| **Force d'adhésion** | | mesuré | | Attendu |
|---|---|---|---|---|
| **Echantillon Sec 1** | N/mm² | 0,55 | | |
| **Echantillon Sec 2** | N/mm² | 1,78 | | |
| **Echantillon Sec 3** | N/mm² | 1,72 | | 1 |
| **Echantillon Humide 4** | N/mm² | 2,13 | | 1 |
| **Echantillon 70°C 5** | N/mm² | 2,23 | | 1 |
| **Echantillon Sec 6** | N/mm² | 0,86 | | 0,5 |

Des essais effectués afin de mesurer la résistance à la déformation du liant adhésif, dont la composition sèche auquel est ajouté du sable est donnée au tableau 1, ont été conduits, ils sont résumés dans le tableau 3. La déformation attendue correspondante selon la norme européenne EN 12002 est donnée à titre comparatif. La encore, le résultat obtenu est très satisfaisant.

**Tableau 3**

| **Déformation** | | mesuré | | Attendu |
|---|---|---|---|---|
| Force | N | 6,27 | | |
| Déformation | mm | 2,88 | | 2,5 |

## Revendications

1. Liant hydraulique comprenant :
- au moins un premier dérivé d'aluminosilicate de calcium d'une finesse inférieure à 6000 Blaine, unité de mesure de la finesse de monture d'un ingrédient solide exprimée en cm²/g de solide, comprenant au moins l'un des éléments sélectionné parmi un laitier de haut fourneau granulé broyé, des cendres volantes, telles que des cendres volantes silico-alumineuses et des cendres volantes silico-calco-alumineuses, de l'argile calcinée et des poussières d'argile expansée, le laitier de haut fourneau granulé broyé étant compris dans une quantité comprise entre 50 et 98% du poids total du liant,
- des microparticules de laitier d'une finesse supérieure ou égale à 6000 Blaine, unité de mesure de la finesse de monture d'un ingrédient solide exprimée en cm²/g de solide, dans une quantité comprise entre 1 et 35% du poids total du liant, de préférence comprise entre 5 et 15%,
- au moins une source de sulfate de calcium, et
- au moins une base choisie parmi un hydroxyde de métal alcalin ou alcalino-terreux, un carbonate de métal alcalin ou alcalino-terreux, et un dérivé de silicate de métal alcalin ou alcalino-terreux dans une quantité inférieure ou égale à 1% du poids total du liant.

2. Liant hydraulique selon la revendication 1, **caractérisé en ce que** les dérivés d'aluminosilicate de calcium d'une finesse inférieure à 6000 Blaine, unité de mesure de la finesse de monture d'un ingrédient solide exprimée en cm²/g de solide, comprennent un laitier de haut fourneau granulé broyé dans une quantité comprise entre 80 et 95%.

3. Liant hydraulique selon l'une quelconque des revendications précédentes, **caractérisé en ce que** les dérivés d'aluminosilicate de calcium d'une finesse inférieure à 6000 Blaine, unité de mesure de la finesse de monture d'un ingrédient solide exprimée en cm²/g de solide, comprennent au moins l'un des éléments sélectionné parmi des cendres volantes, telles que des cendres volantes silico-alumineuses et des cendres volantes silico-calco-alumineuses, dans une quantité inférieure ou égale à 50% du poids total du liant, de préférence comprise entre 5 et 20%, de la poussière d'argile expansée dans une quantité inférieure ou égale à 50% du poids total du liant et de la poussière d'argile calcinée dans une quantité inférieure ou égale à 50% du poids total du liant.

4. Liant hydraulique selon l'une quelconque des revendications précédentes, **caractérisé en ce que** les microparticules de laitier sont d'une finesse comprise entre 6000 et 15000 Blaine, unité de mesure de la finesse de monture d'un ingrédient solide exprimée en cm²/g de solide, de préférence 6000 et 9000 Blaine, de préférence encore 7000 et 8000 Blaine.

5. Liant hydraulique selon l'une quelconque des revendications précédentes, **caractérisé en ce que** la source de sulfate de calcium qu'il comprend est de préférence au moins l'un des éléments sélectionné parmi le gypse, l'hémihydrate du sulfate de calcium, l'anhydrite et le phosphogypse, dans une quantité comprise entre 1 et 5% du poids total du liant, et de préférence comprise entre 2 et 4%.

6. Liant hydraulique selon l'une quelconque des revendications précédentes, **caractérisé en ce qu'**il comprend des sulfates de métaux alcalins tels que le lithium, le sodium et/ou le potassium, dans une quantité inférieure ou égale à 1% du poids total du liant.

7. Liant hydraulique selon l'une quelconque des revendications précédentes, **caractérisé en ce que** la base est choisie parmi au moins l'un des éléments sélectionnés parmi KOH, Ca(OH)₂, Na₂CO₃, K₂CO₃ et Li₂CO₃, et **en ce que** la quantité totale de base est prise inférieure ou égale à 0.5% du poids total du liant, et de préférence de 0.2 à 0.4% du poids total du liant.

8. Liant hydraulique selon l'une quelconque des revendications précédentes, **caractérisé en ce qu'**il comprend en outre au moins l'un des élément sélectionné parmi du ciment de Portland et du ciment de sulfo-aluminate de calcium, de préférence dans une quantité inférieure ou égale à 4% du poids total du liant.

9. Béton, mortier, mortier pré-mélangé, élément préfabriqué, brique, plaque, bloc ou panneau de revêtement comprenant au moins un liant hydraulique selon l'une des revendications précédentes.

10. Procédé de préparation d'un matériau de construction sélectionné parmi ceux de la revendication 9 comprenant les étapes :
1) ajouter au moins un type de granulats, sable et éventuellement au moins un adjuvant,
2) hydrater le liant hydraulique selon l'une des revendications 1 à 8.

## Patentansprüche

1. Hydraulischer Binder, umfassend:
- mindestens ein erstes Calciumaluminiumsilikat-Derivat mit einer Feinheit von weniger als 6000 Blaine, der Maßeinheit für die Mahlfeinheit eines festen Inhaltsstoffs, angegeben in cm²/g des Feststoffs, umfassend mindestens eines der Elemente, die unter einer aufgemahlenen Hochofenschlacke, Flugaschen wie Aluminiumsilikat-Flugaschen und Aluminiumcalciumsilikat-Flugaschen, gebranntem Ton und Blähtonstäuben gewählt sind, wobei die aufgemahlene Hochofenschlacke in einer Menge zwischen 50 und 98 % des Gesamtgewichts des Binders vorliegt,
- Schlacke-Mikropartikel mit einer Feinheit von über oder gleich 6000 Blaine, der Maßeinheit für die Mahlfeinheit eines festen Inhaltsstoffs, angegeben in cm²/g des Feststoffs, in einer Menge zwischen 1 und 35 % des Gesamtgewichts des Binder, bevorzugt zwischen 5 und 15 %,
- mindestens eine Calciumsulfatquelle und
- mindestens eine Base, die unter einem Alkalimetall- oder Erdalkalimetallhydroxid, einem Alkalimetall- oder Erdalkalimetallcarbonat und einem Alkalimetall- oder Erdalkalimetallsilikat-Derivat gewählt ist, in einer Menge von unter oder gleich 1 % des Gesamtgewichts des Binders.

2. Hydraulischer Binder nach Anspruch 1, **dadurch gekennzeichnet, dass** die Calciumaluminiumsilikat-Derivate mit einer Feinheit von weniger als 6000 Blaine, der Maßeinheit für die Mahlfeinheit eines festen Inhaltsstoffs, angegeben in cm²/g des Feststoffs, eine aufgemahlene Hochofenschlacke in einer Menge zwischen 80 und 95 % umfassen.

3. Hydraulischer Binder nach einem der vorhergehenden Ansprüche, **dadurch gekennzeichnet, dass** die Calciumaluminiumsilikat-Derivate mit einer Feinheit von weniger als 6000 Blaine, der Maßeinheit für die Mahlfeinheit eines festen Inhaltsstoffs, angegeben in cm²/g des Feststoffs, mindestens eines der Elemente, die unter Flugaschen wie beispielsweise Aluminiumsilikat-Flugaschen und Aluminiumcalciumsilikat-Flugaschen gewählt sind, in einer Menge von unter oder gleich 50 % des Gesamtgewichts des Binders, bevorzugt zwischen 5 und 20 %, Blähtonstaub in einer Menge von unter oder gleich 50 % des Gesamtgewichts des Binders und gebrannten Tonstaub in einer Menge von unter oder gleich 50 % des Gesamtgewichts des Binders, umfassen.

4. Hydraulischer Binder nach einem der vorhergehenden Ansprüche, **dadurch gekennzeichnet, dass** die Schlacke-Mikropartikel eine Feinheit zwischen 6000 und 15000 Blaine, der Maßeinheit für die Mahlfeinheit eines festen Inhaltsstoffs, angegeben in cm²/g des Feststoffs, bevorzugt zwischen 6000 und 9000 Blaine, noch bevorzugter zwischen 7000 und 8000 Blaine, aufweisen.

5. Hydraulischer Binder nach einem der vorhergehenden Ansprüche, **dadurch gekennzeichnet, dass** die Calciumsulfatquelle, die er umfasst, bevorzugt mindestens eines der Elemente ist, die unter dem Gips, dem Calciumsulfathemihydrat, dem Anhydrit und dem Phosphogips gewählt sind, in einer Menge zwischen 1 und 5 % des Gesamtgewichts des Binders und bevorzugt zwischen 2 und 4 %.

6. Hydraulischer Binder nach einem der vorhergehenden Ansprüche, **dadurch gekennzeichnet, dass** er Sulfate von Alkalimetallen wie dem Lithium, dem Natrium und/oder dem Kalium in einer Menge von unter oder gleich 1 % des Gesamtgewichts des Binders umfasst.

7. Hydraulischer Binder nach einem der vorhergehenden Ansprüche, **dadurch gekennzeichnet, dass** die Base unter mindestens einem der Elemente ausgewählt ist, die unter KOH, Ca(OH)₂, Na₂CO₃, K₂CO₃ und Li₂CO₃ gewählt sind, und dass die Gesamtbasenmenge unter oder gleich 0,5 % des Gesamtgewichts des Binders, bevorzugt 0,2 bis 0,4 % des Gesamtgewichts des Binders, ausmacht.

8. Hydraulischer Binder nach einem der vorhergehenden Ansprüche, **dadurch gekennzeichnet, dass** er ferner mindestens ein Element, das unter Portlandzement und Calciumsulfoaluminatzement gewählt ist, umfasst, bevorzugt in einer Menge von unter oder gleich 4 % des Gesamtgewichts des Binders.

9. Beton, Mörtel, Fertigmörtel, Fertigbauteil, Mauerstein, Platte, Werkstein oder Verblendplatte, umfassend mindestens einen hydraulischen Binder nach einem der vorhergehenden Ansprüche.

10. Verfahren zur Herstellung eines Baumaterials, das unter denen des Anspruchs 9 gewählt ist, umfassend die folgenden Schritte:
1) Zugeben von mindestens einer Granulatart, Sand und gegebenenfalls mindestens einem Zusatzmittel,
2) Hydratisieren des hydraulischen Binders nach einem der Ansprüche 1 bis 8.

## Claims

1. Hydraulic binder comprising:
- at least one first calcium aluminosilicate derivative with a fineness of less than 6000 Blaine, a unit for measuring the fineness of grinding of a solid ingredient, expressed in cm² per gram of solid, comprising at least one of the components selected from a ground granulated blast furnace slag, fly ash, such as aluminosilicate fly ash and lime-alumina-silica fly ash, calcined clay and expanded clay dust, the ground granulated blast furnace slag being in an amount of between 50 and 98% of the total weight of the binder,
- slag microparticles with a fineness of greater than or equal to 6000 Blaine, a unit for measuring the fineness of grinding of a solid ingredient, expressed in cm² per gram of solid, in an amount of between 1 and 35% of the total weight of the binder, preferably of between 5 and 15%,
- at least one source of calcium sulphate and
- at least one base chosen from an alkali metal or alkaline earth metal hydroxide, an alkali metal or alkaline earth metal carbonate, and an alkali metal or alkaline earth metal silicate derivative, in an amount of less than or equal to 1% of the total weight of the binder.

2. Hydraulic binder according to Claim 1, **characterized in that** the calcium aluminosilicate derivatives with a fineness of less than 6000 Blaine, a unit for measuring the fineness of grinding of a solid ingredient, expressed in cm² per gram of solid, comprise a ground granulated blast furnace slag in an amount of between 80 and 95%.

3. Hydraulic binder according to any one of the preceding claims, **characterized in that** the calcium aluminosilicate derivatives with a fineness of less than 6000 Blaine, a unit for measuring the fineness of grinding of a solid ingredient, expressed in cm² per gram of solid, comprise at least one of the components selected from fly ash, such as aluminosilicate fly ash and lime-alumina-silica fly ash, in an amount of less than or equal to 50% of the total weight of the binder, preferably between 5 and 20%, expanded clay dust in an amount of less than or equal to 50% of the total weight of the binder and calcined clay dust in an amount of less than or equal to 50% of the total weight of the binder.

4. Hydraulic binder according to any one of the preceding claims, **characterized in that** the slag microparticles have a fineness of between 6000 and 15 000 Blaine, a unit for measuring the fineness of grinding of a solid ingredient, expressed in cm² per gram of solid , preferably 6000 and 9000 Blaine, more preferably 7000 and 8000 Blaine.

5. Hydraulic binder according to any one of the preceding claims, **characterized in that** the source of calcium sulphate which it comprises is preferably at least one of the components selected from gypsum, calcium sulphate hemihydrate, anhydrite and phosphogypsum, in an amount of between 1 and 5% of the total weight of the binder and preferably of between 2 and 4%.

6. Hydraulic binder according to any one of the preceding claims, **characterized in that** it comprises at least one of the metal sulphates selected from lithium sulphate, sodium sulphate and potassium sulphate in an amount of less than or equal to 1% of the total weight of the binder.

7. Hydraulic binder according to any one of the preceding claims, **characterized in that** the base is chosen from at least one of the components selected from KOH, Ca(OH)₂, Na₂CO₃, K₂CO₃ and LiCO₃, and **in that** the total amount of base is taken to be less than or equal to 0.5% of the total weight of the binder and preferably from 0.2 to 0.4% of the total weight of the binder.

8. Hydraulic binder according to any one of the preceding claims, **characterized in that** it additionally comprises at least one of the components selected from Portland cement and calcium sulphoaluminate cement, preferably in an amount of less or equal to 4% of the total weight of the binder.

9. Concrete, mortar, ready-mixed mortar, prefabricated component, brick, board, block or covering panel comprising at least one hydraulic binder according to one of the preceding claims.

10. Process for the preparation of a construction material selected from those of Claim 9, comprising the stages:
1) adding at least one type of aggregate, sand and optionally at least one admixture, and
2) hydrating the hydraulic binder according to one of Claims 1 to 8.
